# EUROPEAN PATENT APPLICATION

(11) **EP 3 806 232 A2**
(43) Date of publication of application: **14.04.2021**
(21) Application number: 20201086.4
(22) Date of filing: 09.10.2020
(51) Int. Cl.: H01M 50/00

(54) **CATHODE ACTIVE MATERIAL FOR LITHIUM SECONDARY BATTERY AND METHOD OF MANUFACTURING THE SAME**

(30) Priority: 10.10.2019 KR 20190125433
(71) Applicant: SK Innovation Co., Ltd., Seoul 03188 (KR)
(72) Inventor: KIM, Sang Bok, 34124 Daejeon (KR); KIM, Jik Soo, 34124 Daejeon (KR); MOON, Se Rah, 34124 Daejeon (KR); SEO, Jin Seok, 34124 Daejeon (KR); NOH, Mi Jung, 34124 Daejeon (KR); HWANG, Duck Chul, 34124 Daejeon (KR)
(74) Representative: Stolmár & Partner Patentanwälte PartG mbB

(57) **Abstract**

A cathode active material for a lithium secondary battery includes a lithium metal oxide particle and a thiosulfate anion (S₂O₃²⁻) combined on at least a portion of a surface of the lithium metal oxide particle. A content of the thiosulfate anion of the lithium metal oxide particle measured by an ion chromatography analysis is in a range from 100 ppb to 8,000 ppb. Chemical stability and electrical property of the lithium metal oxide particle can be enhanced by the thiosulfate anion

## Description

### CROSS-REFERENCE TO RELATED APPLICATION AND CLAIM OF PRIORITY

This application claims priority to Korean Patent Application No. 10-2019-0125433 filed on October 10, 2019 in the Korean Intellectual Property Office (KIPO), the entire disclosure of which is incorporated by reference herein.

### BACKGROUND

### 1. Field

The present invention relates to a cathode active material for a lithium secondary battery and a method of manufacturing the same. More particularly, the present invention relates to a lithium metal oxide-based cathode active material for a lithium secondary battery and a method of manufacturing the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently a battery pack including the secondary battery is being developed and applied as a power source of an eco-friendly automobile such as a hybrid vehicle.

The secondary battery includes, e.g., a lithium secondary battery, a nickelcadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (a separator), and an electrolyte immersing the electrode assembly. The lithium secondary battery may further include an outer case having, e.g., a pouch shape.

A lithium metal oxide may be used as a cathode active material of the lithium secondary battery, and a nickel-based lithium metal oxide may be used as the lithium metal oxide.

As an application of the lithium secondary battery has been expanded, demands of more improved life-span, capacity and operational stability are increased. In the lithium metal oxide used as the cathode active material, non-uniformity of a chemical structure due to a lithium precipitation may be caused, and the lithium secondary battery having desired capacity and life-span may not be obtained. Further, a structure of the lithium metal oxide may be transformed or damaged when charging and discharging operations are repeated to degrade life-span stability and capacity retention.

For example, Korean Published Patent Application No. 10-0821523 discloses a method of removing lithium salt impurities by washing a lithium complex metal oxide with water. However, the impurities may not be sufficiently removed by the method, and surface damages of cathode active material particles may be caused during the washing process.

### SUMMARY

According to an aspect of the present invention, there is provided a cathode active material for a lithium secondary battery having improved operational stability and electrical property and a method of manufacturing the same.

According to an aspect of the present invention, a cathode active material for a lithium secondary battery includes a lithium metal oxide particle and a thiosulfate anion (S₂O₃²⁻) formed on at least a portion of a surface of the lithium metal oxide particle. A content of the thiosulfate anion of the lithium metal oxide particle measured by an ion chromatography analysis is in a range from 100 ppb to 8,000 ppb.

In some embodiments, the content of the thiosulfate anion may be measured using an extraction solution prepared by a filtration after mixing the cathode active material in a Na₂CO₃ buffer solution for 3 hours at room temperature.

In some embodiments, the content of the thiosulfate anion may be in a range from 400 ppb to 5,000 ppb.

In some embodiments, a surface component represented by Chemical Formula 1 may be detected by a Time of Flight Secondary Ion Mass Spectrometry (TOF-SIMS) analysis on the surface of the lithium metal oxide particle.

[Chemical Formula 1] M1ₓC_{y}H_{z}SₐO_{b}

In the Chemical Formula 1, M1 is an alkali metal or an alkali earth metal, x≥0, y≥0, z≥0, a>0 and b>0.

In some embodiments, the lithium metal oxide particle may include a compound represented by Chemical Formula 2 below.

[Chemical Formula 2] LiₓNi_{y}M_{1-y}O₂

In the Chemical Formula 2 above, 0.95≤x≤1.08, y≥0.5, and M is at least one element selected from a group consisting of Co, Mn, Al, Zr, Ti, B, Mg or Ba.

In some embodiments, in the Chemical Formula 2, 0.8≤y≤0.93.

In some embodiments, the lithium metal oxide particle may include a doping or a coating which contains at least one of Al, Zr or Ti.

In some embodiments, the thiosulfate anion may be directly bonded to the surface of the lithium metal oxide particle

In a method of preparing a cathode active material for a lithium secondary battery according to exemplary embodiments, a preliminary lithium metal oxide particle is prepared. The lithium metal oxide particle is cleaned using a washing solution that includes a thiosulfate compound.

In some embodiments, an amount of the thiosulfate compound may be in a range from 0.05 weight percent to 2 weight percent based on a total weight of the washing solution.

In some embodiments, the thiosulfate compound may include a thiosulfate anion (S₂O₃²⁻) salt including an alkali metal or an alkali earth metal.

In some embodiments, a first washing treatment and a second washing treatment may be performed, and an active material cake may be formed by the first washing treatment.

In some embodiments, the second washing treatment may include providing the washing solution to flow through the active material cake without stirring.

In some embodiments, an amount of the thiosulfate compound in the washing solution used in the first washing treatment may be greater than an amount of the thiosulfate compound in the washing solution used in the second washing treatment.

In some embodiments, a drying or an annealing may be further performed after cleaning the preliminary lithium metal oxide particle to convert the preliminary lithium metal oxide particle into a lithium metal oxide particle on which the thiosulfate compound is coated.

According to exemplary embodiments of the present invention, a preliminary lithium metal oxide particle may be cleaned using a washing solution containing a thiosulfate compound. Thus, impurities such as lithium salt precipitates may be removed while, e.g., the thiosulfate anion (S₂O₃²⁻) compound may be formed on a surface of the lithium metal oxide particles. Accordingly, structural deformation and damages on the surface of the lithium metal oxide particle may be prevented, thereby increasing capacity and power while also improving life-span stability.

According to exemplary embodiments, the thiosulfate anion may be present in a predetermined amount range on the surface of the lithium metal oxide particle, thereby preventing excessive reduction of capacity and efficiency, and improving structural and electrical stability of the lithium metal oxide particle.

### BRIEF DESCRIPTION OF THE DRAWINGS

FIG. 1 is a schematic cross-sectional view illustrating a lithium secondary battery in accordance with exemplary embodiments.
FIG. 2 is a graph showing an ion chromatography analysis result of a cathode active material of Example 4.
FIG. 3 is a graph showing an ion chromatography analysis result of a cathode active material of Comparative Example 1.
FIGS. 4 and 5 are graphs showing capacity properties of lithium secondary batteries according to Examples and Comparative Examples during repeated cycles of charging and discharging.
FIGS. 6 and 7 are graphs showing TOF-SIMS (Time Of Flight-Secondary Ion Mass Spectrometry) analysis results of cathode active materials of Comparative Example 1 and Example 4.

### DETAILED DESCRIPTION OF THE EMBODIMENTS

According to embodiments of the present invention, a cathode active material for a lithium secondary battery including a lithium metal oxide particle and a thiosulfate anion (S₂O₃²⁻) combined to at least a portion of a surface of the lithium metal oxide particle to have improved structural stability is provided. A lithium secondary battery including the cathode active material is also provided.

Hereinafter, embodiments of the present invention will be described in detail with reference to the accompanying drawings. However, the embodiments are provided as exemplary examples, and the spirit of the present invention are not limited to those specific embodiments.

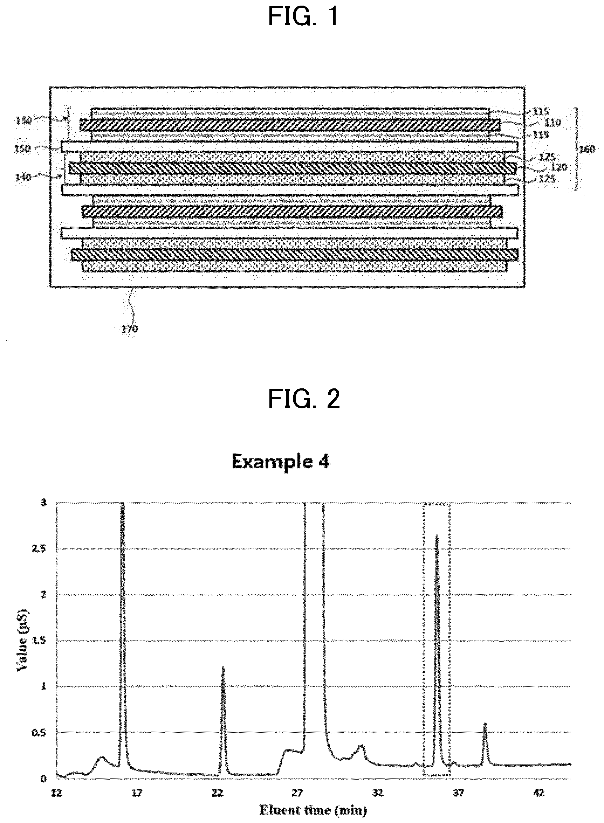

FIG. 1 is a schematic cross-sectional view illustrating a lithium secondary battery in accordance with exemplary embodiments.

Referring to FIG. 1, a lithium secondary battery may include a cathode 130, an anode 140, and a separation layer 150 interposed between the cathode and the anode.

The cathode 130 may include a cathode current collector 110 and a cathode active material layer 115 formed by coating a cathode active material on the cathode current collector 110.

According to example embodiments, the cathode active material may include a lithium metal oxide particle represented by Chemical Formula 2 below.

[Chemical Formula 2] LiₓNi_{y}M_{1-y}O₂

In the Chemical Formula 2 above, 0.95≤x≤1.08, y≥0.5, and M may be at least one element selected from Co, Mn, Al, Zr, Ti, B, Mg or Ba.

For example, nickel (Ni) may be an element related to a capacity of a lithium secondary battery. For example, as an amount of nickel becomes greater, a capacity and a power of the lithium secondary battery may be improved. However, if the amount of Ni excessively increases, mechanical and electrical stability may be degraded.

In exemplary embodiments, 0.8≤y≤0.93 in Chemical Formula 2. If a molar ratio of Ni is less than about 0.8, the capacity and power of the lithium secondary battery may not be sufficiently achieved. If the molar ratio of Ni exceeds about 0.93, life-span and mechanical stability may be degraded.

If the nickel content is excessively increased, failures such as an ignition and a short-circuit may not be sufficiently suppressed when penetration by an external object occurs. Thus, manganese (Mn) and cobalt (Co) may be also distributed throughout particles, and chemical and mechanical instability caused by nickel may be compensated.

For example, Mn may be an element related to mechanical and electrical stability of the lithium secondary battery. The failures such as the ignition and the short-circuit caused by the penetration of the external object may be reduced or suppressed so that life-span of the lithium secondary battery may be increased. Further, cobalt (Co) may be an element related to a conductivity and a resistance of the lithium secondary battery.

Accordingly, the lithium metal oxide particle may include a nickel-cobalt-manganese based compound, and the cathode active material having improved capacity, power, low resistance and life-span may be provided.

In some embodiments, the lithium metal oxide particle may further include a doping or a coating element including at least one of Al, Ti or Zr. These may be used alone or in a combination thereof. For example, the above-described elements may penetrate into a surface of the lithium metal oxide particle by a predetermined depth, and may be formed as an individual layer based from the surface of the lithium metal oxide particle.

For example, an ionic radius of Al, Ti and Zr may be similar to that of Ni, Co, and Mn that are transition metals, and an oxidation number thereof is +3 or +4 which is similar to that of the transition metals. Thus, Al, Ti and Zr may be easily doped in transition metal vacancy sites.

Al may exist as an oxide or a lithium complex oxide on the surface of the lithium metal oxide particle to prevent a surface structure of the cathode active material from being collapsed due to a side reaction between an electrolyte and the cathode active material during an electrochemical reaction. Some Al elements may react with the electrolyte to form an additional stable surface layer.

Ti and Zr are elements having oxidation number of +4, and may substitute Mn⁺⁴ in a high-Ni lithium metal oxide to implement an oxidation number balancing by maintaining an oxidation number of Ni as +2. Further, an oxide containing Ti has excellent electrical conductivity. Thus, when the surface of the lithium metal oxide is coated with the oxide containing Ti, an increase in resistance may be suppressed to improve the power of the lithium secondary battery. Additionally, Zr has a strong binding force with oxygen, so that a structural change caused by an oxygen desorption during an electrochemical reaction at room temperature and high temperature may be prevented to improve a life-span stability of the cathode active material.

In exemplary embodiments, the lithium metal oxide particle may include a thiosulfate anion (S₂O₃²⁻) combined with at least a portion of a surface of the lithium metal oxide particle. For example, the thiosulfate anion may be directly bonded to the surface of the lithium metal oxide particle.

Thus, the thiosulfate anion may prevent a lithium-nickel oxide exposed at the surface of the lithium metal oxide particle from being reacted with air or moisture to generate by-products such as lithium hydroxide, lithium carbonate, nickel oxide, etc. Further, phase-transition and transformation of a crystalline structure at a surface portion due to a reaction between nickel ions exposed at the surface and an electrolyte may be suppressed.

In exemplary embodiments, a content of the thiosulfate anion from the lithium metal oxide particle may be measured by an ion chromatography analysis.

In the ion chromatography analysis, an extraction solution may be obtained. In some embodiments, the cathode active material may be input in a Na₂CO₃ buffer solution, mixed for 3 hours at room temperature and filtered to obtain the extraction solution.

The extraction solution may be introduced in an ion chromatography apparatus to measure a peak area of the thiosulfate anion. For quantitative analysis, the peak area of the thiosulfate anion formed at the surface of the lithium metal oxide particle may be compared to a peak area of a standard solution, and then the amount of the thiosulfate anion may be calculated by a conversion according to a concentration.

In exemplary embodiments, the content of the thiosulfate anion may be in a range from about 100 ppb to about 8,000 ppb. If the content of the thiosulfate anion is less than about 100 ppb, life-span property of the battery may be deteriorated. If the content of the thiosulfate anion exceeds about 8,000 ppb, a discharge capacity and an initial efficiency of the battery may be excessively degraded. Preferably, the content of the thiosulfate anion may be in a range from about 400 ppb to about 5,000 ppb. More preferably, the content of the thiosulfate anion may be in a range from about 400 ppb to about 2,000 ppb. Within the above range, structural stability of the surface of the lithium metal oxide particle may be enhanced, and lithium impurities may be sufficiently removed.

In some embodiments, a surface component represented by Chemical Formula 1 may be detected by a Time of Flight Secondary Ion Mass Spectrometry (TOF-SIMS) analysis on the surface of the lithium metal oxide particle.

[Chemical Formula 1] M1ₓC_{y}H_{z}SₐO_{b}

In Chemical Formula 1, M1 may represent an alkali metal or an alkali earth metal. Here, x≥0, y≥0, z≥0, a>0 and b>0.

In some embodiments, M1 may include a metal ion of sodium, calcium, potassium, barium, etc. M1 may be selected according to a type of the thiosulfate compound in a washing solution used in a cleaning process. For example, the surface component including NaSO₆⁻ and C₅H₅S₃O₃⁻ may be detected. It is confirmed or predicted that the thiosulfate anion is combined with the surface of the lithium metal oxide through the detection of the surface component.

Hereinafter, a method of preparing the cathode active material will be described in more detail.

According to exemplary embodiments, active material metal salts may be prepared. The active material metal salts may include a nickel salt, a manganese salt and a cobalt salt. Examples of the nickel salt may include nickel sulfate, nickel hydroxide, nickel nitrate, nickel acetate and hydrates thereof. Examples of the manganese salt may include manganese sulfate, manganese acetate and hydrates thereof. Examples of the cobalt salt may include cobalt sulfate, cobalt nitrate, cobalt carbonate and hydrates thereof.

The active material metal salts may be mixed with a precipitating agent and/or a chelating agent in a ratio satisfying the content or concentration ratio of each metal described with reference to Chemical Formula 2 to prepare an aqueous solution. The aqueous solution may be co-precipitated in a reactor to prepare a complex metal salt compound (e.g., an NCM precursor).

The precipitating agent may include an alkaline compound such as sodium hydroxide (NaOH), sodium carbonate (Na₂CO₃), etc. The chelating agent may include, e.g., aqueous ammonia (e.g., NH₃H₂O) or ammonium carbonate (e.g., NH₃HCO₃).

Thereafter, a lithium salt compound may be mixed with the complex metal salt compound and reacted through a co-precipitation method to prepare preliminary lithium metal oxide particles. The lithium salt compound may include, e.g., lithium carbonate, lithium nitrate, lithium acetate, lithium oxide, lithium hydroxide, or the like. These may be used alone or in combination thereof.

The preliminary lithium metal oxide particles may further include a transition metal or an oxide thereof as doping or coating. For example, the doping or coating may include Al, Zr, Ti or an oxide thereof.

The preliminary lithium metal oxide particle may include a nickel-cobalt-manganese based lithium oxide. In the nickel-cobalt-manganese based lithium oxide, an amount of the doping element may be in a range from about 0.1 mol% to about 1 mol% based on a total mole of Ni, Co, Mn and the doping element (e.g., Al, Zr and/or Ti), preferably in a range from about 0.5 mol% to about 1 mol%. Within the above range, chemical and structural stability of the cathode active material particle may be enhanced without excessively degrading an activity of the cathode active material.

The coating may be derived from a coating metal oxide such as Al₂O₃, ZrO₂ and/or TiO₂. An adding amount of the coating metal oxide for a formation of the coating may be in a range from about 0.5 wt% to about 1 wt% based on a total weight of the nickel-cobalt-manganese based lithium oxide.

The doping or coating may be formed by mixing the preliminary lithium metal oxide particle prepared as described above with a transition metal or a transition metal oxide powder, and then performing a thermal treatment.

The preliminary lithium metal oxide particle may be washed using a cleaning solution containing a thiosulfate compound. Unreacted precursors remaining on the surface of the preliminary lithium metal oxide particle may be removed by the cleaning treatment, and a thiosulfate anion may be bonded to at least a portion of the surface of the preliminary lithium metal oxide particle.

In some embodiments, at least two washing treatments may be performed. For example, a first washing treatment and a second washing treatment may be sequentially performed. In the first washing treatment, the washing solution may be supplied to the preliminary lithium metal oxide particle, and filtered to form an active material cake having a dough shape. The active material cake may have a porous structure in which the preliminary lithium metal oxide particles may be physically aggregated to form flow paths.

In the second washing treatment, the washing solution may be input over the active material cake without stirring to penetrate pores or the flow paths formed therein. Thus, the washing or cleaning process may be easily performed without additionally stirring or mixing the preliminary lithium metal oxide particles with the washing solution.

The washing solution may be prepared by dissolving the thiosulfate compound in a washing solvent. The thiosulfate compound may include a thiosulfate (S₂O₃²⁻) salt containing an alkali metal or an alkali earth metal. For example, the alkali metal or the alkali earth metal may form an ion of sodium, calcium, potassium, barium, or the like.

In exemplary embodiments, water may be used as the washing solvent, and sodium thiosulfate, calcium thiosulfate, potassium thiosulfate, barium thiosulfate, or the like may be used as the thiosulfate compound. The thiosulfate compound may be easily dissolved in water so that the washing solution may be easily prepared at room temperature while preventing precipitation of the thiosulfate compound.

In an embodiment, a polar organic solvent such as an alcohol-based solvent may be used as the washing solvent.

In some embodiments, an amount of the thiosulfate compound may be in a range from about 0.01 wt% to about 2 wt% based on a total weight of the washing solution. Within this range, the thiosulfate anion may be combined with the surface of the lithium metal oxide particle by the above-mentioned amount through the washing process. Preferably, the amount of the thiosulfate compound may be in a range from 0.1 wt% to about 2 wt% based on the total weight of the washing solution.

If the amount of the thiosulfate compound exceeds about 2 wt%, an excessive amount of the thiosulfate anion may be combined with the surface of the preliminary lithium metal oxide particle to degrade an initial discharging amount and an initial efficiency of the cathode active material.

In some embodiments, an amount of the thiosulfate compound in the washing solution for the first washing treatment (a first washing solution) may be greater than that in the washing solution for the second washing treatment (a second washing solution). The active material cake having the thiosulfate anion bonded to a surface thereof may be formed using the first washing solution. The second washing solution may include a relatively large amount of the washing solvent so that impurities remaining on the surface of the preliminary lithium metal oxide particle may be effectively removed.

Drying and/or annealing processes may be performed after the washing treatments using the washing solution so that preliminary lithium metal oxide particle may be converted into a lithium metal oxide particle on which the thiosulfate compound may be coated.

For example, the preliminary lithium metal oxide particle or the active material cake may be thermally treated in a vacuum atmosphere for a predetermined time after the washing treatment.

The annealing process may be performed at a temperature, e.g., in a range from about 200 °C to about 300 °C. For example, the annealing temperature may be slowly increased to a target temperature at a rate of about 1-5 °C/min. The preliminary lithium metal oxide particle may be maintained in a furnace at the target temperature for a predetermined time. Accordingly, the lithium metal oxide particle to which the thiosulfate anion is fixed may be achieved.

The thermally treated lithium metal oxide particle may be distributed using a mesh of a predetermined pore size to serve as the cathode active material.

The cathode active material may be mixed and stirred together with a binder, a conductive agent and/or a dispersive agent in a solvent to form a slurry. The slurry may be coated on the cathode current collector 110, and pressed and dried to obtain the cathode 130.

The cathode current collector 110 may include stainless-steel, nickel, aluminum, titanium, copper or an alloy thereof. Preferably, aluminum or an alloy thereof may be used.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power output of the lithium secondary battery may be further improved.

The conductive agent may be added to facilitate an electron mobility between the active material particles. For example, the conductive additive may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃.

In exemplary embodiments, the anpde 140 may include an anode current collector 120 and an anode active material layer 125 formed by coating an anode active material on the anode current collector 120.

The anode active material may include a material that may be capable of adsorbing and ejecting lithium ions. For example, a carbon-based material such as a crystalline carbon, an amorphous carbon, a carbon complex or a carbon fiber, a lithium alloy, silicon, tin, etc., may be used. The amorphous carbon may include a hard carbon, cokes, a mesocarbon microbead (MCMB) calcinated at a temperature of 1,500 °C or less, a mesophase pitch-based carbon fiber (MPCF), etc. The crystalline carbon may include a graphite-based material such as natural graphite, graphitized cokes, graphitized MCMB, graphitized MPCF, etc. The lithium alloy may further include aluminum, zinc, bismuth, cadmium, antimony, silicon, lead, tin, gallium, or indium.

The anode current collector 120 may include gold, stainless-steel, nickel, aluminum, titanium, copper or an alloy thereof, preferably, may include copper or a copper alloy.

In some embodiments, the anode active material may be mixed and stirred together with a binder, a conductive agent and/or a dispersive agent in a solvent to form a slurry. The slurry may be coated on the anode current collector 120, and pressed and dried to obtain the anode 140.

The binder and the conductive agent substantially the same as or similar to those as mentioned above may be used. In some embodiments, the binder for the anode may include an aqueous binder such as such as styrene-butadiene rubber (SBR) that may be used with a thickener such as carboxymethyl cellulose (CMC) so that compatibility with the carbon-based active material may be improved.

The separation layer 150 may be interposed between the cathode 130 and the anode 140. The separation layer 150 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 150 may be also formed from a non-woven fabric including a glass fiber with a high melting point, a polyethylene terephthalate fiber, or the like.

In some embodiments, an area (e.g., a contact area with the separator 150) and/or a volume of the cathode 140 may be larger than that of the anode 130. Accordingly, a transfer of lithium ions generated from the cathode 130 to the anode 140 may be promoted without precipitation. Accordingly, improvements of power and stability through the use of the above-described cathode active material may be more effectively implemented.

In exemplary embodiments, an electrode cell 160 may be defined by the cathode 130, the anode 140 and the separation layer 150, and a plurality of the electrode cells 160 may be stacked to form an electrode assembly having, e.g., a jelly roll shape. For example, the electrode assembly may be formed by winding, laminating or folding of the separation layer.

The electrode assembly may be accommodated in an outer case 170 together with an electrolyte to form the lithium secondary battery. In example embodiments, the electrolyte may include a non-aqueous electrolyte solution.

The non-aqueous electrolyte solution may include a lithium salt and an organic solvent. The lithium salt may be represented by Li⁺X⁻, and an anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

An electrode tab may be formed from each of the cathode current collector 110 and the anode current collector 120 to extend to one end of the outer case 170. The electrode tabs may be welded together with the one end of the outer case 170 to form an electrode lead exposed at an outside of the outer case 170.

The lithium secondary battery may be fabricated into a cylindrical shape using a can, a prismatic shape, a pouch shape, a coin shape, etc.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Examples and Comparative Examples

### (1) Preparing Cathode Active Material

Lithium metal oxide particles having a composition of Li[Ni_{0.88}Co_{0.09}Mn_{0.03}]O₂ were used in Example and Comparative Examples. Thiosulfate additives as listed in Table 1 below and de-ionized water (DIW) having a resistivity less than 25M Ω cm were mixed to prepare thiosulfate washing solutions.

50 g of the lithium metal oxide particle was input in a first washing solution having a concentration as shown in Table 1, stirred for 10 minutes, and then vacuum filtrated using Buchner funnel to form an active material cake.

A second washing solution having a concentration as shown in Table 1 was introduced to the active material cake to penetrate through the active material cake without additional stirring and mixing.

The active material cake washed twice using the thiosulfate washing solutions was dried for 10 hours or more at a temperature between 200 °C and 300 °C under a vacuum condition to remove moistures. Subsequently, lithium metal oxide particles as a cathode active material were obtained by a distribution using 325 mesh.

**[Table 1]**

| | Cathode Active Material | Thiosulfate Additive | Amount of additive in washing solution (wt%) | |
|---|---|---|---|---|
| | | | First Washing Solution | Second Washing Solution |
| Example 1 | Li[Ni_{0.88}Co_{0.09}Mn_{0.03}]O₂ | sodium thiosulfate | 0.1 | 0.03 |
| Example 2 | Li[Ni_{0.88}Co_{0.09}Mn_{0.03}]O₂ | sodium thiosulfate | 0.3 | 0.1 |
| Example 3 | Li[Ni_{0.88}Co_{0.09}Mn_{0.03}]O₂ | sodium thiosulfate | 0.6 | 0.2 |
| Example 4 | Li[Ni_{0.88}Co_{0.09}Mn_{0.03}]O₂ | sodium thiosulfate | 1 | 0.33 |
| Example 5 | Li[Ni_{0.88}Co_{0.09}Mn_{0.03}]O₂ | sodium thiosulfate | 1.5 | 0.5 |
| Example 6 | Li[Ni_{0.88}Co_{0.09}Mn_{0.03}]O₃ | calcium thiosulfate | 1 | 0.33 |
| Example 7 | Li[Ni_{0.88}Co_{0.09}Mn_{0.03}]O₄ | potassium thiosulfate | 1 | 0.33 |
| Example 8 | Li[Ni_{0.88}Co_{0.09}Mn_{0.03}]O₅ | barium thiosulfate | 0.1 | 0.03 |
| Comparative Example 1 | Li[Ni_{0.88}Co_{0.09}Mn_{0.03}]O₂ | sodium thiosulfate | 0 | 0 |
| Comparative Example 2 | Li[Ni_{0.88}Co_{0.09}Mn_{0.03}]O₂ | sodium thiosulfate | 0.05 | 0.02 |
| Comparative Example 3 | Li[Ni_{0.88}Co_{0.09}Mn_{0.03}]O₂ | sodium thiosulfate | 2 | 0.67 |

### (2) Fabrication of Secondary Battery

Each lithium metal oxide particles of Examples and Comparative Examples, carbon black as a conductive additive and PVDF as a binder were mixed by a weight ratio of 92:5:3 to form a slurry. The slurry was uniformly coated on an aluminum foil having a thickness of 15 µm and vacuum-dried at 130 °C to form a cathode for a lithium secondary battery. An electrode assembly was formed using the cathode, a lithium foil as a counter electrode, a porous polyethylene layer (thickness: 21 µm) as a separator. A battery cell having a coin half-cell shape was fabricated by a commonly known process using the electrode assembly and an electrolyte solution in which 1.0 M of LiPF₆ was dissolved in a solution including ethylene carbonate and ethyl methyl carbonate by a volume ratio of 3:7.

### Experimental Example

### (1) Analysis on Cathode Active Material

### Measurement of remaining lithium salt impurities

5.0g of each lithium metal oxide particle according to Examples and Comparative Examples was quantified in a 250mL flask with 100g of deionized water, and then a magnetic bar was put and stirred for 10 minutes at a rate of 100 rpm. The mixture was filtered using a pressure reducing flask and 50g of the mixture was collected. The collected mixture was automatically titrated with 0.1N HCl in an auto titrator with referent to Wader Method to measure amounts of LiOH and Li₂CO₃ as shown in Table 2 below.

### IC analysis

An ion chromatography (IC) analysis was performed to detect a thiosulfate anion component remaining on surfaces of the cathode active materials of Examples and Comparative Examples. 2 g of each cathode active material was put in 3 mM Na₂CO₃ buffer solution and mixed for 3 hours at room temperature. The solution was filtered by a 0.2 µm syringe filter, and then introduced to an IC apparatus with an amount of 10 µl for an analysis. A ratio of a sample and an extraction solution (an extraction ratio) was represented by D = extraction solution (g) / active material (g). Specific conditions of the IC analysis were as follows. The IC apparatus was Thermo ICS-6000, a column was IonPac A319-4µm connected with IonPac AS19-4um Guard Column, and a suppressor was AERS_2mm. EGC 500 KOH cartridge was used as an eluent and a multi-step gradient analysis was performed. A flow rate of a pump was 0.25 ml/min, a temperature of the column was 30 °C, and a pressure in the column was 2900-3200 psi. The analysis was performed for 70 minutes.

More particularly, the multi-step gradient analysis included five steps as follows: First step: 0-5 minutes, KOH 3mM; Second step: 5-40 minutes, KOH 3-40 mM; Third step: 40-50 minutes, KOH 40 mM, Fourth step: 51-59 minutes, KOH 100 mM; Fifth step: 59.5-70 minutes, KOH 3 mM.

FIG. 2 is a graph showing an ion chromatography analysis result of a cathode active material of Example 4. Referring to FIG. 2, a peak of the thiosulfate anion (S₂O₃²⁻) was detected at an eluent time in a range from 35-37 minutes.

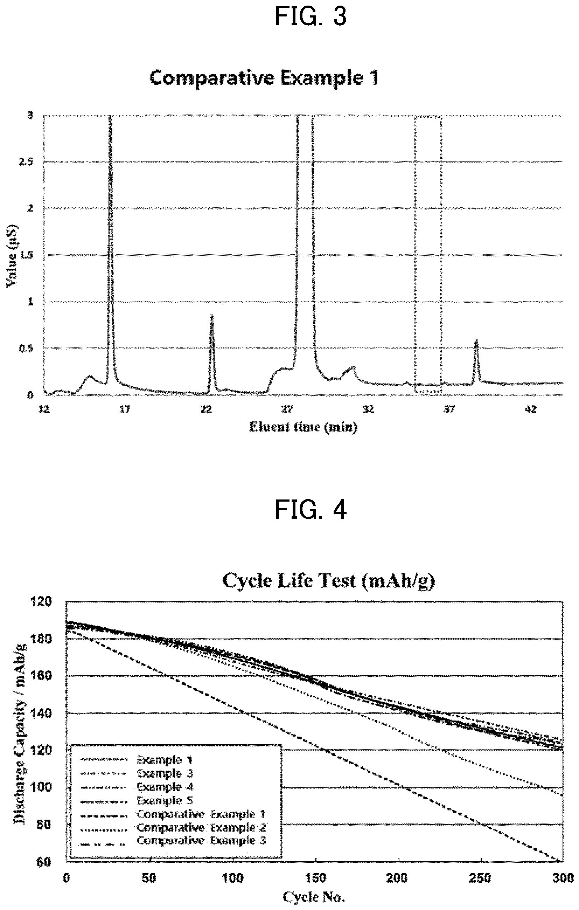

FIG. 3 is a graph showing an ion chromatography analysis result of a cathode active material of Comparative Example 1. Referring to FIG. 3, a peak of the thiosulfate anion (S₂O₃²⁻) was not detected.

For a quantitative calculation, standard solutions, each of which contained the thiosulfate anion by an amount of 60ppb, 100ppb, 600ppb, 1000ppb, 2000ppb, and 11000ppb to perform the IC analysis. A calibration curve relation was induced using a concentration of the standard solution (X, ppb) and a peak area (Y, µS/cm • sec) of the thiosulfate anion detected from each standard solution. Specifically, in a low concentration range, the standard solutions of 60ppb, 100ppb, 600ppb and 1000ppb were used to calculate the calibration curve relation. In a high concentration range, the standard solutions of 2000ppb and 11000ppb were used to calculate the calibration curve relation. In the low concentration range, the equation of Y₁ = 0.301X₁ - 0.006 was used. In the high concentration range, the equation of Y₂ = 0.337X₂ - 0.048 was used. A linearity of each calibration curve satisfied the relation of R²> 0.999.

In Comparative Example 2, Example 1, Example 2 and Example 3 having relatively low concentrations of the thiosulfate anion, the peak area of the thiosulfate anion was input in Y₁ to obtain a content of the thiosulfate anion as X₁ in a diluted solution. In Comparative Example 3, Example 4 and Example 5 having relatively high concentrations of the thiosulfate anion, the peak area of the thiosulfate anion was input in Y₂ to obtain the content of the thiosulfate anion as X₂ in a diluted solution. Finally, the extraction ratio D was multiplied by each X₁ and X₂ to obtain a content of the thiosulfate anion.

The results are shown in Table 2 below.

**[Table 2]**

| | LiOH(ppm) | Li₂CO₃(ppm) | thiosulfate(S₂O₃²⁻) content (ppb) |
|---|---|---|---|
| Example 1 | 1470 | 1960 | 200 |
| Example 2 | 1420 | 2100 | 479 |
| Example 3 | 1530 | 2040 | 1990 |
| Example 4 | 1680 | 1930 | 4898 |
| Example 5 | 1230 | 2140 | 7807 |
| Example 6 | 1390 | 2100 | 4703 |
| Example 7 | 1420 | 2180 | 4650 |
| Example 8 | 1390 | 1990 | 210 |
| Comparative Example 1 | 1410 | 1820 | N.D.(<20ppb) |
| Comparative Example 2 | 1560 | 1790 | 90 |
| Comparative Example 3 | 1520 | 2000 | 10200 |

### (2) Evaluation of Battery Properties

### Measurement of initial charging/discharging capacity

One cycle of a charging (CC/CV 0.1C 4.3V 0.05CA CUT-OFF) and a discharging (CC 0.1C 3.0V CUT-OFF) was performed to the battery cells of Examples and Comparative Examples, and initial charging and discharging capacities were measured (CC: constant current, CV: Constant voltage)

### Measurement of initial efficiency

The initial discharging capacity measured as mentioned above was denominated by the initial charging capacity to measure an initial efficiency as a percentage value.

### Measurement of capacity retention (life-span property)

300 cycles of a charging (CC/CV 0.5C 4.3V 0.05CA CUT-OFF) and a discharging (CC 1.0C 3.0V CUT-OFF) were repeated using the battery cells of Examples and Comparative Examples. A discharging capacity at the 300th cycle was denominated by the discharging capacity at the first cycle to measure a capacity retention ratio as a percentage value.

The results are shown in Table 3 below.

**[Table 3]**

| | Initial Charging Capacity | Initial Discharging Capacity | Initial Efficiency | Life-span @ 300th |
|---|---|---|---|---|
| | mAh/g | mAh/g | % | % |
| Example 1 | 233.5 | 210.5 | 90.1% | 64% |
| Example 2 | 234.0 | 211.0 | 90.2% | 65% |
| Example 3 | 233.8 | 210.9 | 90.2% | 67% |
| Example 4 | 235.2 | 211.7 | 90.0% | 67% |
| Example 5 | 235.4 | 210.7 | 89.5% | 67% |
| Example 6 | 235.1 | 211.3 | 89.9% | 65% |
| Example 7 | 235.3 | 211.4 | 89.9% | 63% |
| Example 8 | 234.4 | 211.3 | 90.1% | 63% |
| Comparative Example 1 | 236.9 | 210.2 | 88.7% | 33% |
| Comparative Example 2 | 233.6 | 209.6 | 89.7% | 51% |
| Comparative Example 3 | 234.6 | 207.0 | 88.2% | 64% |

Referring to Tables 2 and 3, the batteries of Examples having 100-8000 ppb of the thiosulfate anion on a surface of the lithium metal oxide particle showed greater charging/discharging efficiency and capacity retention than those of the batteries of Comparative Examples.

The batteries of Examples showed the initial discharging capacity in a range from 210.5 mAh/g to 212 mAh/g, and the initial efficiency of about 90%. However, in the battery of Comparative Example 3 having the content of the thiosulfate anion greater than 8000 ppb, the initial discharging capacity and the initial efficiency were drastically decreased. That is, electrical stability of the lithium metal oxide particle was deteriorated due to an excessive thiosulfate anion coating and the charging/discharging efficiency was also degraded.

Further, the batteries of Examples showed improved life-span properties in a range from 63% to 67%. However, in the battery of Comparative Examples 1 and 2 having the content of the thiosulfate anion less than 100 ppb, life-span properties were decreased. That is, it can be predicted that stability at the surface and an inside of the cathode active material particles were enhanced by a combination of the thiosulfate anion to increase capacity retentions.

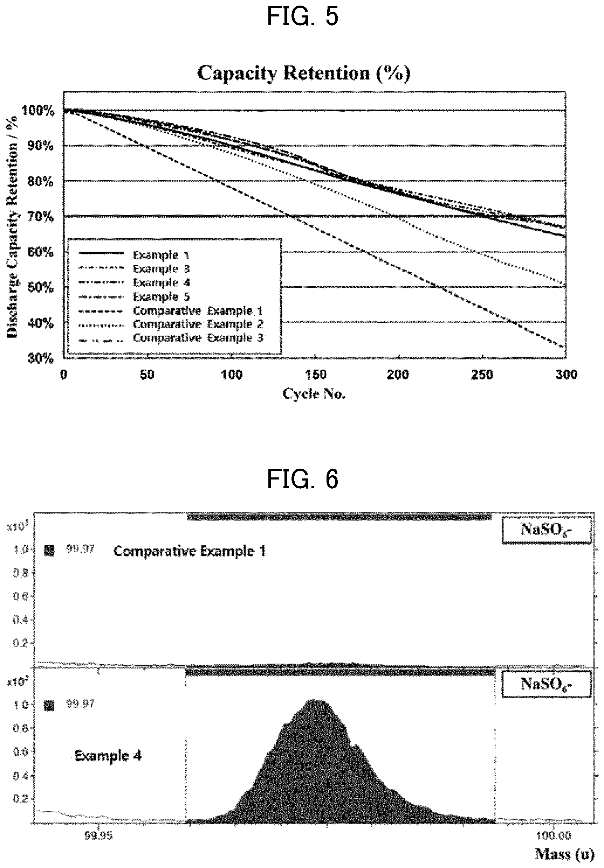

FIGS. 4 and 5 are graphs showing electro-chemical properties of lithium secondary batteries including lithium metal oxides according to Examples and Comparative Examples.

Specifically, FIG. 4 is a graph showing capacity changes during 300 cycles of charging and discharging in Examples 1 to 5 and Comparative Examples 1 to 3. FIG. 5 is a graph showing capacity retentions during 300 cycles of charging and discharging in Examples 1 to 5 and Comparative Examples 1 to 3.

Referring to FIGS. 4 and 5, in the batteries of Examples, substantially constant capacity properties were maintained while performing 100 cycles.

### (3) TOF-SIMS analysis

Surfaces of the lithium metal oxide surfaces were analyzed using a TOF-SIMS (ION-TOF GmbH, Germany) apparatus equipped with Bi³⁺ ion gun. Electrodes fabricated using the cathode active materials of Comparative Example 1 and Example 4 were attached to a measuring substrate, degassed for 30 minutes or more, and then vacuumed under a pressure of 10⁻⁹ mBar or less to remove impurities. Subsequently, a secondary ion mass spectrum was achieved in an area 50 ^{∗} 50 µm² for 800 seconds.

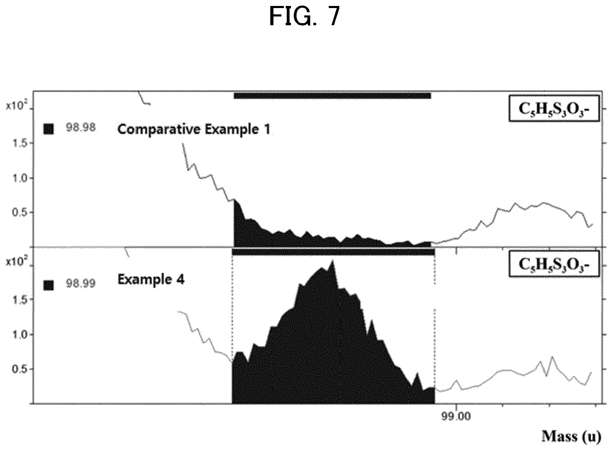

FIGS. 6 and 7 are graphs showing TOF-SIMS (Time Of Flight-Secondary Ion Mass Spectrometry) analysis results of cathode active materials of Comparative Example 1 and Example 4.

Specifically, FIG. 6 is graph showing an intensity of NaSO₆⁻. FIG. 7 is graph showing an intensity of C₅H₅S₃O₃⁻. It is confirmed or acknowledged that the thiosulfate anions were combined with at least a portion of the surface of the lithium metal oxide particle according to Example 4.

## Claims

1. A cathode active material for a lithium secondary battery, comprising:
a lithium metal oxide particle; and
a thiosulfate anion (S₂O₃²⁻) combined on at least a portion of a surface of the lithium metal oxide particle,
wherein a content of the thiosulfate anion of the lithium metal oxide particle measured by an ion chromatography analysis is in a range from 100 ppb to 8,000 ppb.

2. The cathode active material for a lithium secondary battery according to claim 1, wherein the content of the thiosulfate anion is measured using an extraction solution prepared by a filtration after mixing the cathode active material in a Na₂CO₃ buffer solution for 3 hours at room temperature.

3. The cathode active material for a lithium secondary battery according to claim 1, wherein the content of the thiosulfate anion is in a range from 400 ppb to 5,000 ppb.

4. The cathode active material for a lithium secondary battery according to claim 1, wherein a surface component represented by Chemical Formula 1 is detected by a Time of Flight Secondary Ion Mass Spectrometry (TOF-SIMS) analysis on the surface of the lithium metal oxide particle:
[Chemical Formula 1] M1ₓC_{y}H_{z}SₐO_{b}
wherein, in the Chemical Formula 1, M1 is an alkali metal or an alkali earth metal, x ≥ 0, y ≥ 0, z ≥ 0, a>0 and b>0.

5. The cathode active material for a lithium secondary battery according to claim 1, wherein the lithium metal oxide particle includes a compound represented by Chemical Formula 2 below:
[Chemical Formula 2] LiₓNi_{y}M_{1-y}O₂
wherein, in the Chemical Formula 2 above, 0.95 ≤ x ≤ 1.08, y ≥ 0.5, and M is at least one element selected from a group consisting of Co, Mn, Al, Zr, Ti, B, Mg or Ba.

6. The cathode active material for a lithium secondary battery according to claim 5, wherein, in the Chemical Formula 2, 0.8 ≤ y ≤ 0.93.

7. The cathode active material for a lithium secondary battery according to claim 1, wherein the lithium metal oxide particle includes a doping or a coating which contains at least one of Al, Zr or Ti.

8. The cathode active material for a lithium secondary battery according to claim 1, wherein the thiosulfate anion is directly bonded to the surface of the lithium metal oxide particle

9. A method of preparing a cathode active material for a lithium secondary battery, comprising:
preparing a preliminary lithium metal oxide particle; and
cleaning the preliminary lithium metal oxide particle using a washing solution that includes a thiosulfate compound.

10. The method according to claim 9, wherein an amount of the thiosulfate compound is in a range from 0.05 weight percent to 2 weight percent based on a total weight of the washing solution.

11. The method according to claim 9, wherein the thiosulfate compound includes a thiosulfate anion (S₂O₃²⁻) salt including an alkali metal or an alkali earth metal.

12. The method according to claim 9, wherein cleaning the lithium metal oxide particle includes a first washing treatment and a second washing treatment, and an active material cake is formed by the first washing treatment.

13. The method according to claim 12, wherein the second washing treatment includes providing the washing solution to flow through the active material cake without stirring.

14. The method according to claim 12, wherein an amount of the thiosulfate compound in the washing solution used in the first washing treatment is greater than an amount of the thiosulfate compound in the washing solution used in the second washing treatment.

15. The method according to claim 9, further comprising performing a drying or an annealing after cleaning the preliminary lithium metal oxide particle to convert the preliminary lithium metal oxide particle into a lithium metal oxide particle on which the thiosulfate compound is coated.
